# EUROPÄISCHE PATENTSCHRIFT

(11) **EP 0 480 515 B1**
(45) Veröffentlichungstag und Bekanntmachung des Hinweises auf die Patenterteilung: **17.05.1995**
(21) Anmeldenummer: 91202582.2
(22) Anmeldetag: 03.10.1991
(51) Int. Cl.: G11B 23/087

(54) **Kassette für einen Aufzeichnungsträger**
Cassette for a record carrier
Cassette pour un support d'enregistrement

(30) Priorität: 11.10.1990 AT 2049/90
(43) Veröffentlichungstag der Anmeldung: 15.04.1992
(73) Patentinhaber: Philips Electronics N.V., 5621 BA Eindhoven (NL)
(72) Erfinder: Vollmann, Norbert, NL-5656 AA Eindhoven (NL); Stöger, Anton, 5656 AA Eindhoven (NL); Habelt, Gerhard, NL-5656 AA Eindhoven (NL)
(74) Vertreter: Cuppens, Hubertus Martinus Maria

(56) Entgegenhaltungen:
- EP-A- 478 057
- EP-A- 0 135 195
- EP-A- 0 406 943
- EP-A- 0 438 144
- DE-A- 3 414 587
- FR-A- 2 529 701
- GB-A- 2 143 072
- GB-A- 2 163 887
- US-A- 4 470 083

## Beschreibung

Die Erfindung betrifft eine Kassette für einen Aufzeichnungsträger, der zum Aufzeichnen und/oder Wiedergeben von Aufzeichnungen mit Abtastmitteln abtastbar ist, mit einem im wesentlichen quaderförmigen Kassettengehäuse, in dem der Aufzeichnungsträger untergebracht ist und das mindestens einen Freistellbereich für den Aufzeichnungsträger aufweist, in dem die Abtastmittel mit dem Aufzeichnungsträger in Abtastverbindung bringbar sind, und mit mindestens einem an dem Kassettengehäuse verstellbar geführten Verschlußschieber, der zwischen einer Abdeckposition, in der derselbe den Freistellbereich zumindest teilweise abdeckt, und einer Freigabeposition, in der derselbe den Freistellbereich freigibt, verstellbar ist und der in Richtung zu seiner Abdeckposition von mindestens einer im wesentlichen U- bzw. Ω-förmig ausgebildeten drahtförmigen Biegefeder belastet ist, die sich am Kassettengehäuse abstützt und in einer gehäuseaußenseitigen Vertiefung im Kassettengehäuse angeordnet ist.

Eine solche Kassette gemäß dem eingangs angeführten Absatz ist vorgeschlagen worden in der EP-A 406 943, gehörend zum Stand der Technik im Sinne von Artikel 54 Absatz 3 EPÜ. Es handelt sich dabei um eine Magnetbandkassette, die im Bereich einer langen schmalen Seitenwand und den beiden an diese Seitenwand angrenzenden Hauptwänden Öffnungen im Kassettengehäuse als Freistellbereich für den durch ein Magnetband gebildeten Aufzeichnungsträger aufweist. Die Öffnungen sind mittels einem im wesentlichen U-förmigen Verschlußschieber abdeckbar, der von einer Abdeckposition, in der der Verschlußschieber die Öffnungen abdeckt, in eine seitliche Freigabeposition verstellbar ist. An den Verschlußschieber greift eine U- bzw. Ω-förmige Biegefeder an, die in einer Aussparung in der langen schmalen Seitenwand des Kassettengehäuses untergebracht ist. Dabei ist die Biegefeder sowohl in der Abdeckposition als auch in der Freigabeposition des Verschußschiebers von dem Verschlußschieber zur Gänze überdeckt. Weil die Biegefeder zwischen das Kassettengehäuse und den Verschußschieber gespannt wird ist die Montage der Kassette kompliziert.

Eine ähnliche Kassette ist bekannt aus der EP-A-478 057. In diesem Dokument sind Blockierteile für das Blockieren der Wickelkerne beschrieben.

Eine andere Kassette ist bekannt aus der EP-A-135 195. In diesem Dokument ist eine Kassette mit einem Verschlußschieber beschrieben, der zwischen einer Abdeckposition und einer Freigabeposition verstellbar ist, und der in Richtung zu seiner Abdeckposition von mindestens einer Feder belastet ist, die sich am Kassettengehäuse abstützt und in einer gehäuseaußenseitigen Aussparung im Kassettengehäuse angeordnet ist. Die in der Aussparung angeordnete Feder ist sowohl bei in seiner Abdeckposition als auch bei in seiner Freigabeposition befindlichem Verschlußschieber von dem Verschlußschieber zur Gänze überdeckt, und ist zwischen einer Begrenzungswand gegenüberliegenden Abschnitt des Verschlußschiebers gehalten.

Die Erfindung hat sich zur Aufgabe gestellt, bei einer Kassette einer Gattung gemäß dem eingangs angeführten Absatz eine Kassette zu schaffen, wobei eine einfache Montage der Biegefeder als auch des Verschußschiebers erreicht wird. Dazu stütz in einer ersten Lösung jedes der beiden Enden der U- bzw. Ω-förmigen Biegefeder sich im Bereich einer die wannenförmige Vertiefung begrenzenden Begrenzungswand und greift die U- bzw. Ω-förmige Biegefeder mit einem zwischen ihren beiden Enden liegenden Federabschnitt an dem Verschlußschieber. Dies ist hinsichtlich einer einfachen Montage der U- bzw. Ω-förmigen Biegefeder vorteilhaft.

Dabei hat sich als besonders vorteilhaft erwiesen, wenn der der Bodenwand der Vertiefung gegenüberliegende Abschnitt des Verschlußschiebers einen von diesem Abschnitt quer abstehenden Lappen aufweist, an dem die U- bzw. Ω-förmige Biegefeder mit dem zwischen den beiden Enden liegenden Federabschnitt angreift, und daß dieser Lappen zugleich als Blockierteil vorgesehen ist, der bei in seiner Abdeckposition befindlichem Verschlußschieber den Bewegungsspielraum des im Kassettengehäuse untergebrachten Aufzeichnungsträgers begrenzt. Dies ist deshalb besonders vorteilhaft, weil der ohnehin als Blockierteil vorgesehene Lappen zugleich als Angriffsstelle für die Biegefeder am Verschlußschieber ausgenützt wird.

Eine solche Ausführungsform gemäß dem vorstehenden Absatz eignet sich besonders für eine Magnetbandkassette, die von der Anmelderin vorgeschlagen wird in der EP-A 478 057. Die vorgeschlagene Kassette besitzt einen Verschlußschieber, der zwei Blockierfortsätze aufweist, die durch zwei Durchbrüche in einer Gehäusehauptwand hindurch in das Kassetteninnere ragen und die in der Abdeckposition des Verschlußschiebers mit den beiden Wickelkernen für das Magnetband zusammenwirken und die Wickelkerne gegen Verdrehen blockieren.

Im Zusammenhang mit einer im wesentlichen U- bzw. Ω-förmig ausgebildeten drahtförmigen Biegefeder hat sich eine zweite Lösung als vorteilhalft erwiesen, bei der eines der beiden Enden der U-bzw. Ω-förmigen Biegefeder zum Angreifen an dem Verschlußschieber vorgesehen ist, wobei das zum Angreifen an dem Verschlußschieber vorgesehen Ende der U- bzw. Ω-förmigen Biegefeder im wesentlichen senkrecht zu der Bodenwand der Vertiefung von dem die Biegefeder überdeckenden Abschnitt des Verschlußschiebers wegweisend abgewinkelt ausgebildet ist und für dieses abgewinkelte Ende der Biegefeder in der Bodenwand der Vertiefung ein einseitig offener, in einen Freistellschlitz für das abgewinkelte Ende der Biegefeder mündender Vormontageschlitz vorgesehen ist, in den das abgewinkelte Ende beim Montieren der Biegefeder am Kassettengehäuse eingeführt wird und an dessen geschlossenem Ende sich das abgewinkelte Ende der Biegefeder nach deren Montage abstützt, und der Verschlußschieber einen Mitnehmer aufweist, der nach dem Montieren des Verschlußschiebers am Kassettengehäuse beim erstmaligen Verstellen des Verschlußschiebers von seiner Abdeckposition in seine Freigabeposition mit dem in den Vormontageschlitz eingeführten abgewinkelten Ende der Biegefeder in Wirkverbindung kommt und das abgewinkelte Ende der Biegefeder aus dem einseitig offenen Vormontageschlitz heraus und in den Freistellschlitz hinein verstellt, wonach das abgewinkelte Ende der Biegefeder am Verschlußschieber angreift. Hiedurch wird sowohl eine einfache Montage der Biegefeder als auch des Verschlußschiebers erreicht, wobei beim erstmaligen Verstellen des Verschlußschiebers von seiner Abdeckposition in seine Freigabeposition die Biegefeder automatisch mit dem Verschlußschieber in Wirkverbindung gebracht wird.

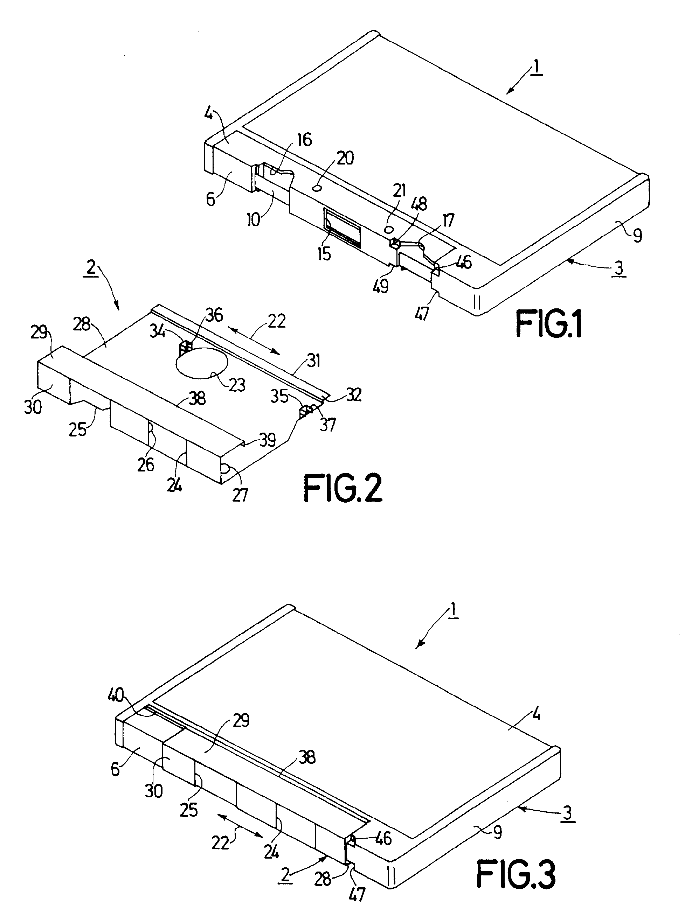

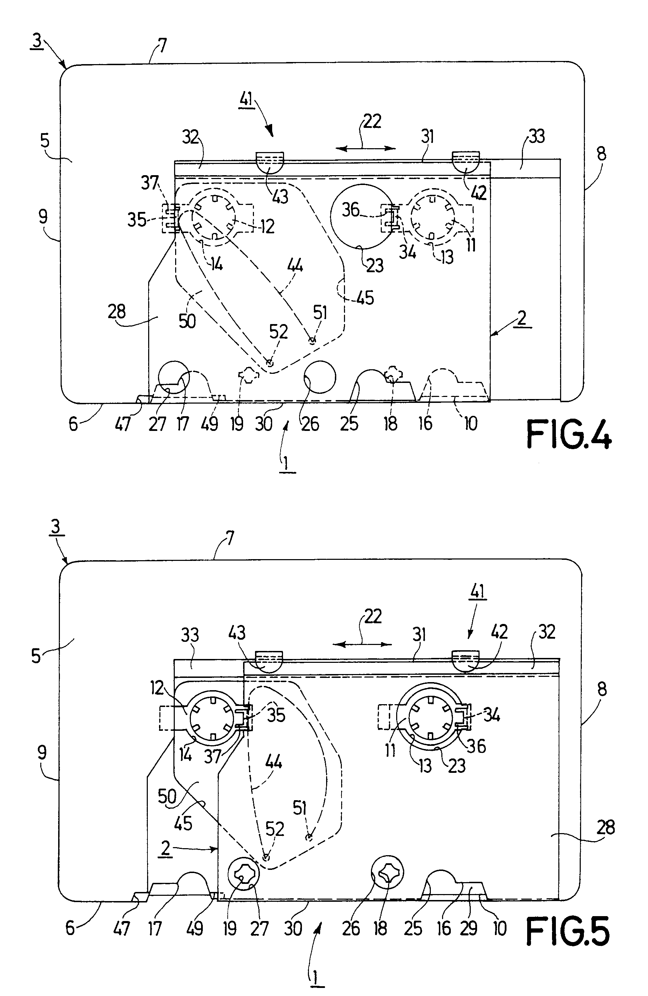

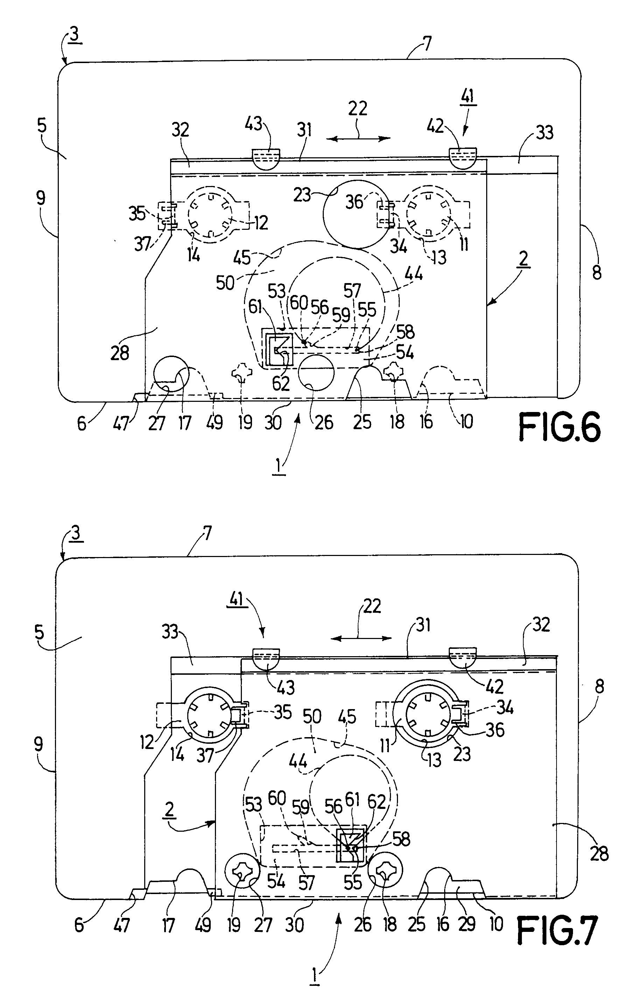

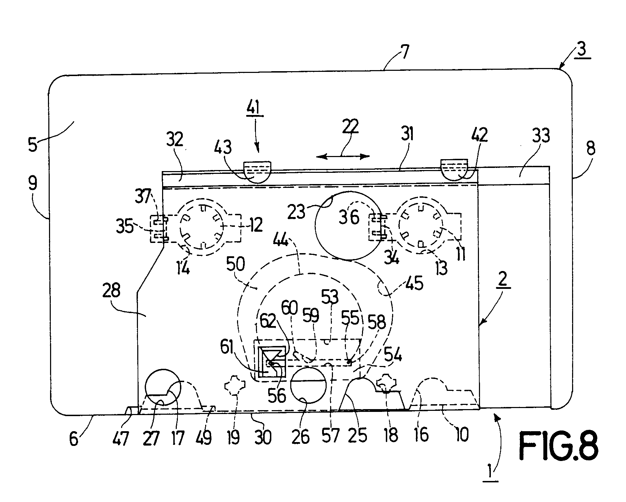

Die Erfindung wird im folgenden anhand von einigen in den Zeichnungen dargestellten Ausführungsbeispielen näher beschrieben, auf die die Erfindung jedoch nicht beschränkt sein soll. Die Fig.1 zeigt in axionometrischer Darstellungsweise eine ein Magnetband als Aufzeichnungsträger enthaltende Kassette gemäß einem ersten Ausführungsbeispiel in einem Zustand, in dem ein Verschlußschieber dieser Kassette noch nicht mit dem Kassettengehäuse derselben verbunden ist. Die Fig.2 zeigt ebenfalls in axionometrischer Darstellungsweise einen Verschlußschieber für die Kassette gemäß Fig.1. Die Fig.3 zeigt analog wie die Fig.1 die Kassette gemäß Fig.1 in einem Zustand, in dem der Verschlußschieber gemäß Fig.2 an dem Kassettengehäuse der Kassette montiert ist. Die Fig.4 zeigt die Kassette gemäß Fig.3 in einer gegenüber der Lage in Fig.3 um 180° gewendeten Lage in Draufsicht auf die bodenseitige Hauptwand dieser Kassette, die zur federnden Belastung des Verschlußschiebers eine im wesentlichen U-förmig ausgebildete drahtförmige Biegefeder aufweist, wobei der Verschlußschieber von der U-förmigen Biegefeder in einer Abdeckposition desselben gehalten ist. Die Fig.5 zeigt analog wie die Fig.4 die Kassette gemäß den Figuren 3 und 4, wobei der Verschlußschieber der Kassette entgegen der Kraft der U-förmigen Biegefeder in eine Freigabeposition desselben verstellt ist. Die Fig.6 zeigt in analoger Weise wie die Figuren 4 und 5 eine Kassette gemäß einem zweiten Ausführungsbeispiel, die zur federnden Belastung des Verschlußschiebers eine Ω-förmig ausgebildete drahtförmige Biegefeder aufweist, wobei der Verschlußschieber und die Ω-förmige Biegefeder je in einer Position dargestellt sind, die sie unmittelbar nach ihrem Montieren am Kassettengehäuse einnehmen. Die Fig.7 zeigt analog wie die Figuren 4 bis 6 die Kassette gemäß Fig.6, wobei der Verschlußschieber der Kassette entgegen der Kraft der Ω-förmigen Biegefeder in eine Freigabeposition desselben verstellt ist. Die Fig.8 zeigt analog wie die Figuren 4 bis 7 die Kassette gemäß den Figuren 6 und 7, wobei der Verschlußschieber von der ihn belastenden Ω-förmigen Biegefeder in einer Abdeckposition gehalten ist.

Die Fig.1 zeigt eine Kassette 1 in einem Zustand, in dem ein in Fig.2 dargestellter Verschlußschieber 2 der Kassette noch nicht am Kassettengehäuse 3 der Kassette 1 montiert ist. Das Kassettengehäuse 3 der Kassette 1 ist quaderförmig ausgebildet und weist eine Deckenwand 4 und eine Bodenwand 5 als Hauptwände sowie eine längere schmale Frontwand 6, eine längere schmale Rückwand 7, eine kürzere linke Seitenwand 8 und eine kürzere rechte Seitenwand 9 auf.

Die Kassette 1 ist zur Aufnahme eines Aufzeichnungsträgers 10 vorgesehen, der in vorliegendem Fall durch ein Magnetband gebildet ist. Das Magnetband 10 ist in an sich bekannter Weise zwischen zwei rotierend antreibbaren Wickelkernen 11 und 12, von denen die zentralen Abschnitte in den Figuren 4 und 5 dargestellt sind, hin und her wickelbar. Zum Antreiben der Wickelkerne 11 und 12 dienen nicht dargestellte Wickeldorne eines Aufzeichnungs- und/oder Wiedergabegerätes, in das die Kassette 1 zum Aufzeichnen und/oder Wiedergeben von Aufzeichnungen einsetzbar ist. Die Wickeldorne 11 und 12 sind dabei durch Öffnungen 13 und 14 in der Bodenwand 5 des Kassettengehäuses 3 hindurch in das Innere der Kassette 1 einführbar und mit den Wickelkernen 11 und 12 in Antriebsverbindung bringbar.

Zum Aufzeichnen und/oder Wiedergeben von Aufzeichnungen, wie beispielsweise von Musikstücken, von Sprachdarbietungen und dergleichen, ist das Magnetband 10 mit mindestens einem als Abtastmittel vorgesehenen, nicht dargestellten Magnetkopf eines Aufzeichnungs- und/oder Wiedergabegerätes abtastbar. Um einen solchen Magnetkopf mit dem Magnetband 10 in Abtastverbindung bringen zu können, weist das Kassettengehäuse 3 der Kassette 1 einen Freistellbereich auf, in dem der Magnetkopf mit dem Magnetband 10 in Abtastverbindung bringbar ist. Dieser Freistellbereich ist bei der vorliegenden Kassette 1 im wesentlichen durch eine in der Frontwand 6 des Kassettengehäuses 3 vorgesehene rechteckförmige Öffnung 15 gebildet, in der das Magnetband 10 verläuft.

Beim Aufzeichnen und/oder Wiedergeben von Aufzeichnungen wird das Magnetband 10 mit konstanter Fortbewegungsgeschwindigkeit an dem durch die Öffnung 15 hindurch mit dem Magnetband 10 in Abtastverbindung stehenden Magnetkopf entlang bewegt. Zum Antreiben des Magnetbandes 10 mit konstanter Fortbewegungsgeschwindigkeit wirken mit dem Magnetband 10 zwei je mit konstanter Drehzahl angetriebene Antriebswellen eines Aufzeichnungs- und/oder Wiedergabegerätes zusammen, gegen die das Magnetband 10 mit zwei verstellbaren und drehbar gelagerten Andruckrollen des Aufzeichnungs- und/oder Wiedergabegerätes angedrückt wird. Um den Antriebswellen und den Andruckrollen den Zutritt zu dem Magnetband 10 zu ermöglichen, weist das Kassettengehäuse 3 zwei weitere Öffnungen 16 und 17 auf, die sich beide von der Deckenwand 4 über die Frontwand 6 zur Bodenwand 5 des Kassettengehäuses 3 erstrecken. Die Antriebswellen werden durch die bodenwandseitigen Anteile der Öffnungen 16 und 17 hinter das Magnetband 10 gebracht und danach wird das Magnetband 10 von den durch die frontwandseitigen Anteile der Öffnungen 16 und 17 hindurch mit dem Magnetband 10 in Kontakt gebrachten Andruckrollen gegen die Antriebswellen gedrückt.

Um die Kassette 1 nach ihrem Einführen in ein Aufzeichnungs- und/oder Wiedergabegerät genau in ihrer Betriebsposition positionieren zu können, weist die Kassette 1 in ihrer Bodenwand 5 zwei im wesentlichen sternförmige Positionieröffnungen 18 und 19 auf. In diese Positionieröffnungen 18 und 19 sind der Form dieser Positionieröffnungen entsprechend geformte Positionierstifte eines Aufzeichnungs- und/oder Wiedergabegerätes einführbar. Den Positionieröffnungen 18 und 19 in der Bodenwand 5 liegen in der Deckenwand 4 zwei weitere Öffnungen 20 und 21 gegenüber, in die die dünnen zylindrischen freien Enden der Positionierstifte einführbar sind, wenn die Positionierstifte tatsächlich so lange ausgebildet sind, was aber nicht der Fall sein muß.

Die Kassette 1 weist somit eine Reihe von Öffnungen auf, nämlich die Öffnungen 13, 14, 15, 16, 17, 18, 19, 20 und 21. Durch diese Öffnungen könnten ohne weitere Vorkehrungen Schmutzpartikel leicht in das Kassetteninnere gelangen, was eine Verschmutzung zur Folge hätte, die sich insbesondere dann störend auswirkt, wenn sich die in das Kassetteninnere eingedrungenen Schmutzpartikel am Magnetband ablagern, da dies eine Verschlechterung der Aufnahme- und Wiedergabequalität und auch eine Verschmutzung und Beschädigung des mit dem Magnetband zusammenwirkenden Magnetkopfes zur Folge hat. Auch kann es durch einen Teil dieser Öffnungen leicht zu einer mechanischen Beschädigung des Magnetbandes 10 kommen.

Um diesen Gefahren vorzubeugen, ist die Kassette 1 mit dem Verschlußschieber 2 versehen, der an dem Kassettengehäuse 3 parallel zu einer Verstellrichtung, die mit einem Doppelpfeil 22 angegeben ist, verstellbar geführt ist. Der Verschlußschieber 2 ist zwischen einer in den Figuren 3 und 4 dargestellten Abdeckposition und einer in Fig.5 dargestellten Freigabeposition verstellbar. In seiner Abdeckposition deckt der Verschlußschieber 2 die Öffnungen 13, 14, 15, 16, 17, 18, 19, 20 und 21 und damit auch den Freistellbereich für das Magnetband 10 im Bereich der Öffnung 15, in dem ein Magnetkopf mit dem Magnetband 10 in Abtastverbindung bringbar ist, zur Gänze ab, so daß die Kassette 1 im wesentlichen relativ dicht abgeschlossen ist und Schmutzpartikel nicht ohne weiteres in das Kassetteninnere eindringen können. In seiner Freigabeposition gibt der Verschlußschieber 2 die Öffnungen 13, 14, 15, 16, 17, 18 und 19 und somit auch den erwähnten Freistellbereich, in dem ein Magnetkopf mit dem Magnetband 10 in Abtastverbindung bringbar ist, frei. Hiefür weist der Verschlußschieber 2, der zweckmäßigerweise als Blechteil aus einem dünnen Stahlblech ausgebildet ist, zu den Öffnungen 13, 15, 16, 18 und 19 im Kassettengehäuse 3 korrespondierende Öffnungen 23, 24, 25, 26 und 27 auf. Zu den Öffnungen 14 und 17 im Kassettengehäuse 3 weist der Verschlußschieber 2 keine korrespondierenden Öffnungen auf, weil die äußeren Konturen des Verschlußschiebers 2 so ausgebildet sind, daß der Verschlußschieber 2 ohne das Vorsehen von separaten Öffnungen in demselben in seiner Freigabeposition die Öffnungen 14 und 17 im Kassettengehäuse 3 freigibt.

Der Verschlußschieber 2 ist in einem zu seiner Verstellrichtung 22 senkrechten Querschnitt im wesentlichen U-förmig ausgebildet. Der Verschlußschieber 2 weist einen parallel zur Bodenwand 5 des Kassettengehäuses 3 verlaufenden ersten Schenkelabschnitt 28, der im wesentlichen plattenförmig ausgebildet ist, und einen parallel zur Deckenwand 4 des Kassettengehäuses 3 verlaufenden zweiten Schenkelabschnitt 29 auf. Diese beiden Schenkelabschnitte 28 und 29 sind über einen parallel zur Frontwand 6 des Kassettengehäuses 3 verlaufenden Stegabschnitt 30 miteinander verbunden.

Der erste Schenkelabschnitt 28, der durch einen plattenförmigen Abschnitt gebildet ist, weist einen parallel zur Verstellrichtung 22 verlaufenden Randbereich 31 mit einer vorgegebenen Länge auf. In diesem Randbereich 31 weist der plattenförmige erste Schenkelabschnitt 28 des Verschlußschiebers 2 eine aus der Plattenebene dieses Abschnittes 28 zum Kassettengehäuse 3 hin versetzte Abstufung 32 auf. Dabei ist in der Bodenwand 5 des Kassettengehäuses 3 eine wannenförmige Vertiefung 33 zur Aufnahme der Abstufung 32 des Verschlußschiebers 2 vorgesehen.

Der plattenförmige erste Schenkelabschnitt 28 des Verschlußschiebers 2 weist zwei von diesem Schenkelabschnitt 28 quer abstehende Lappen 34 und 35 auf. Jeder dieser beiden Lappen 34 und 35 ist als Blockierteil vorgesehen, der bei in seiner Abdeckposition befindlichem Verschlußschieber 2 den Bewegungsspielraum des im Kassettengehäuse 3 untergebrachten Magnetbandes 10 begrenzt. Hiefür weist jeder der beiden Lappen 34 und 35 je zwei Zinken 36 und 37 auf. Die Lappen 34 und 35 mit ihren Zinken 36 und 37 ragen durch die Öffnungen 13 und 14 in der Bodenwand 5 des Kassettengehäuses 3 hindurch in das Kassetteninnere. In der Abdeckposition des Verschlußschiebers 2 wirken die Zinken 36 und 37 mit nicht dargestellten Verzahnungen an den Wickelkernen 11 und 12 für das Magnetband 10 zusammen und blockieren auf diese Weise die Wickelkerne 11 und 12 gegen Verdrehen.

Der Verschlußschieber 2 ist senkrecht zur Deckenwand 4 und Bodenwand 5 dadurch geführt, daß die beiden Schenkelabschnitte 28 und 29 des Verschlußschiebers 2 an der Bodenwand 5 bzw. der Deckenwand 4 gleitend anliegen. Um den Verschlußschieber 2 auch senkrecht zur Frontwand 6 zu führen, weist der parallel zur Deckenwand 4 verlaufende zweite Schenkelabschnitt 29 des Verschlußschiebers 2 in seinem Randbereich 38 einen zur Deckenwand 4 hin rechtwinkelig abgewinkelten, parallel zur Verstellrichtung 22 des Verschlußschiebers 2 verlaufenden leistenförmigen Endabschnitt 39 auf und ist in der Deckenwand 4 des Kassettengehäuses 3 eine parallel zur Verstellrichtung 22 verlaufende Führungsnut 40 vorgesehen, in die der rechtwinkelig abgewinkelte leistenförmige Endabschnitt 39 des zweiten Schenkelabschnittes 29 des Verschlußschiebers 2 zur Führung des Verschlußschiebers 2 hineinragt.

Um ein Abheben des plattenförmigen ersten Schenkelabschnittes 28 des Verschlußschiebers 2 von der Bodenwand 5 des Kassettengehäuses 3 zu verhindern, sind Niederhaltemittel 41 vorgesehen, die mit dem Kassettengehäuse 3 verbunden sind und die den plattenförmigen ersten Schenkelabschnitt 28 des Verschlußschiebers 2 in seinem Randbereich 31 übergreifen. Die Niederhaltemittel 41 sind hiebei durch zwei Niederhaltelappen 42 und 43 gebildet, die mit Abstand voneinander angeordnet sind und von denen jeder parallel zur Verstellrichtung 22 des Verschlußschiebers 2 eine Abmessung aufweist, die nur einen Bruchteil der Länge des Randbereiches 31 des plattenförmigen ersten Schenkelabschnittes 28 des Verschlußschiebers 2 beträgt, den die Niederhaltelappen 42 und 43 übergreifen. Die Niederhaltelappen 42 und 43 sind durch gegenüber dem Kassettengehäuse 3 separate Teile gebildet, die nach dem Montieren des Verschlußschiebers 2 am Kassettengehäuse 3 mit dem Kassettengehäuse 2 verbunden werden.

Der Verschlußschieber 2 ist in Richtung zu seiner Abdeckposition von einer Feder 44 belastet, die sich am Kassettengehäuse 3 abstützt und die in einer gehäuseaußenseitigen Aussparung 45 im Kassettengehäuse 3 angeordnet ist. Diese Belastungsfeder 44 trachtet danach, den Verschlußschieber 2 in seiner Abdeckposition zu halten. Um in einem Aufzeichnungs- und/oder Wiedergabegerät einen Aufzeichnungs- und/oder Wiedergabevorgang durchführen zu können, muß der Verschlußschieber 2 aus seiner Abdeckposition entgegen der Kraft der Belastungsfeder 44 in seine Freigabeposition verstellt werden. Die Verstellung des Verschlußschiebers 2 in seine Freigabeposition erfolgt nach dem Einsetzen der Kassette 1 in das Aufzeichnungs- und/oder Wiedergabegerät mit Hilfe einer geräteseitigen Verstelleinrichtung, die an einem Ende des Verschlußschiebers 2 in den beiden Übergangsbereichen zwischen dem Stegabschnitt 30 und dem ersten Schenkelabschnitt 28 und zwischen dem Stegabschnitt 30 und dem zweiten Schenkelabschnitt 29 des Verschlußschiebers 2 angreift. Um dieses Angreifen der geräteseitigen Verstelleinrichtung zu ermöglichen, weist das Kassettengehäuse 3 in den beiden Übergangsbereichen zwischen der Frontwand 6 und der Bodenwand 5 bzw. zwischen der Frontwand 6 und der Deckenwand 4 beidseitig in Bezug auf die Öffnung 17 vorgesehene Ausnehmungen 46, 47, 48 und 49 auf.

Wie aus den Figuren 4 und 5 ersichtlich ist, ist bei der vorliegenden Kassette 1 vorteilhafterweise sowohl bei in seiner in Fig.4 dargestellten Abdeckposition als auch bei in seiner in Fig.5 dargestellten Freigabeposition befindlichem Verschlußschieber 2 die in der Aussparung 45 angeordnete Feder 44, die den Verschlußschieber 2 in Richtung zu seiner Abdeckposition belastet, von dem Verschlußschieber 2 zur Gänze überdeckt. Die Feder 44 ist dabei zwischen einer Begrenzungswand, nämlich der Bodenwand 50 der Aussparung 45 und dem dieser Bodenwand 50 der Aussparung 45 gegenüberliegenden Abschnitt des Verschlußschiebers 2, der durch den plattenförmigen ersten Schenkelabschnitt 28 gebildet ist, gehalten. Dadurch, daß die Feder 44 stets zur Gänze von dem Verschlußschieber 2 überdeckt ist, kann die Feder 44 nicht beschädigt werden, ist eine Verschmutzung der Feder 44 praktisch ausgeschlossen und kann die Feder 44 auch nicht verlorengehen, da sie mittels des Verschlußschiebers 2 innerhalb der Aussparung 45 im Kassettengehäuse 3 gehalten wird.

Die Aussparung 45 im Kassettengehäuse 3, in der die Feder 44 angeordnet ist, ist durch eine wannenförmige Vertiefung in der Bodenwand 5 des quaderförmigen Kassettengehäuses 3 gebildet. Dabei ist die Feder 44 zwischen der Bodenwand 50 der Vertiefung 45 und dem dieser Bodenwand 50 gegenüberliegenden, parallel zur Bodenwand 5 des Kassettengehäuses 3 verlaufenden plattenförmigen Schenkelabschnitt 28 des Verschlußschiebers 2 gehalten. Hiedurch ist eine relativ große Freiheit in der Wahl der zur Verwendung geeigneten Federn erreicht.

Die in der wannenförmigen Vertiefung 45 angeordnete Feder 44 ist als drahtförmige Biegefeder ausgebildet, die zwischen der Bodenwand 50 der Vertiefung 45 und dem dieser Bodenwand 50 der Vertiefung 45 gegenüberliegenden ersten Schenkelabschnitt 28 des Verschlußschiebers 2 gehalten ist. Die Abmessung einer solchen Feder senkrecht zur Bodenwand der Vertiefung ist besonders klein und daher kann auch die Tiefe der Vertiefung sehr gering sein. Dies ist hinsichtlich einer besonders flachen Kassettenausbildung vorteilhaft.

Wie aus den Figuren 4 und 5 ersichtlich, ist die drahtförmige Biegefeder 44 im wesentlichen U-förmig ausgebildet, wodurch eine relativ flache Federkennlinie erreicht wird. Die beiden rechtwinkelig abgewinkelten Enden 51 und 52 der U-förmigen Biegefeder 44 sind in Löcher in der Bodenwand 50 der Vertiefung 45 eingesteckt und sind auf diese Weise an der Bodenwand 5 des Kassettengehäuses 3 abgestützt. Auf diese Weise ist ein besonders einfaches Montieren der Biegefeder an dem Kassettengehäuse erreicht. Die beiden Federenden 51 und 52 sind dabei sowohl parallel zur Verstellrichtung 22 des Verschlußschiebers 2 als auch senkrecht zu dieser Verstellrichtung 22 gegeneinander versetzt angeordnet, wodurch die Biegefeder 44 eine Vorspannung erhält, die die Kraft zur Belastung des Verschlußschiebers 2 bestimmt. Mit einem zwischen ihren beiden Federenden 51 und 52 liegenden Federabschnitt greift die U-förmige Biegefeder 44 an dem Verschlußschieber 2 an. Dabei wird der als Blockierteil vorgesehene Lappen 35 zusätzlich als Angriffsstelle für die Biegefeder 44 ausgenützt.

Bei dem Ausführungsbeispiel gemäß den Figuren 6, 7 und 8 ist die Belastungsfeder 44 für den Verschlußschieber 2 durch eine Ω-förmig ausgebildete drahtförmige Biegefeder gebildet, die ebenfalls den Vorteil einer flachen Federkennlinie aufweist. Die Ω-förmige Biegefeder 44 ist in einer Aussparung 45 angeordnet, die auch hier durch eine wannenförmige Vertiefung gebildet ist. Diese Aussparung 45 weist einen rechteckigen Bereich 53 auf, dessen Bodenwand 54 tiefer liegt als die Bodenwand 50 des übrigen Bereiches der Aussparung 45. Zwischen der Bodenwand 50 und dem plattenförmigen ersten Schenkelabschnitt 28 des Verschlußschiebers 2 ist die Biegefeder 44 verstellbar gehalten und höhenmäßig geführt.

Wie aus den Figuren 6, 7 und 8 ersichtlich ist, ist bei der Kassette 1 gemäß dem zweiten Ausführungsbeispiel zusätzlich zur Biegefeder 44 auch die Aussparung 45, in der die Biegefeder 44 angeordnet ist, sowohl bei in seiner Abdeckposition als auch bei in seiner Freigabeposition befindlichem Verschlußschieber 2 von dem Verschlußschieber 2 zur Gänze überdeckt. Hiedurch ist ein besonders guter Schutz gegen Beschädigen, Verschmutzen und Verlieren der Biegefeder 44 erreicht. Weiters ist auf diese Weise ein gutes gefälliges Aussehen der Kassette erreicht, weil weder die Biegefeder 44 noch die Aussparung 45 für die Biegefeder 44 zum Vorschein kommt.

Die Ω-förmige Biegefeder 44 weist zwei Enden 55 und 56 auf. Die beiden Federenden 55 und 56 sind senkrecht zur Bodenwand 50 der Vertiefung 45 von dem die Biegefeder 44 überdeckenden plattenförmigen ersten Schenkelabschnitt 28 des Verschlußschiebers 2 wegweisend abgewinkelt ausgebildet. Das eine Federende 55 der Ω-förmigen Biegefeder 44 stützt sich im Bereich der die Vertiefung 45 begrenzenden Bodenwand 54 ab. Hiefür ist in der Bodenwand 54 des rechteckigen Bereiches 53 der Vertiefung 45 ein Schlitz 57 vorgesehen, an dessen einem Schlitzende 58 sich das eine Federende 55 abstützt. Das andere Federende 56 der Ω-förmigen Biegefeder 44 ist zum Angreifen an dem Verschlußschieber 2 vorgesehen. Für dieses andere Ende 56 der Biegefeder 44 ist in der Bodenwand 54 des Bereiches 53 der Vertiefung 45 ein einseitig offener, in den Schlitz 57 mündender Vormontageschlitz 59 vorgesehen. In diesen Vormontageschlitz 59 wird das abgewinkelte andere Federende 56 beim Montieren der Biegefeder 44 am Kassettengehäuse 3 eingeführt. An dem geschlossenen Ende 60 des Vormontageschlitzes 59 stützt sich das abgewinkelte Ende 56 der Biegefeder 44 nach deren Montage am Kassettengehäuse 3 ab, wie dies aus Fig. 6 ersichtlich ist. Die Fig.6 zeigt den Verschlußschieber und die Belastungsfeder 44 je in einer Lage, die diese Teile nach ihrer Montage am Kassettengehäuse 3 einnehmen. Hieraus ist ersichtlich, daß der Verschlußschieber 2 in einer Lage am Kassettengehäuse 3 montiert wird, die der Abdeckposition des Verschlußschiebers 2 entspricht.

Der Verschlußschieber 2 weist einen Mitnehmer 61 auf, der in vorliegendem Fall durch einen aus der Ebene des plattenförmigen Schenkelabschnittes 28 abgewinkelten, mit dem Schenkelabschnitt 28 einstückig verbundenen L-förmigen Lappen gebildet ist, der eine V-förmige Kerbe 62 aufweist. Der Mitnehmer 61 kommt mit seiner V-förmigen Kerbe 62 nach dem Montieren des Verschlußschiebers 2 am Kassettengehäuse 3 beim erstmaligen Verstellen des Verschlußschiebers 2 von seiner Abdeckposition in seine Freigabeposition mit dem in den Vormontageschlitz 59 eingeführten abgewinkelten Federende 56 der Biegefeder 44 in Wirkverbindung. Dabei nimmt der Lappen 61 über seine Kerbe 62 das abgewinkelte Federende 56 der Biegefeder 44 mit und verstellt dieses Federende 56 aus dem einseitig offenen, in den Schlitz 57 mündenden Vormontageschlitz 59 heraus und in den Schlitz 57 hinein. Danach greift somit das abgewinkelte Federende 56 der Biegefeder 44 am Verschlußschieber 2 an. Durch den Schlitz 57 ist bei einer Verstellung des Verschlußschiebers 2 parallel zu seiner Verstellrichtung 22 ein unbehindertes Verstellen des Federendes 56 der Biegefeder 44 gewährleistet. Der Schlitz 57 bildet somit einen Freistellschlitz für das abgewinkelte andere Federende 56 der Biegefeder 44. Der Bereich 53 der Vertiefung 45 bildet bei einer Verstellung des Verschlußschiebers 2 parallel zu seiner Verstellrichtung 22 einen Freistellbereich für den als Mitnehmer vorgesehenen Lappen 61. Durch das Vorsehen des Vormontageschlitzes 59 ist auch bei der vorliegenden Kassette ein sehr einfaches Montieren der Ω-förmigen Biegefeder 44 an dem Kassettengehäuse 3 erreicht, wobei die Biegefeder 44 bei einer erstmaligen Verstellung des Verschlußschiebers 2 von dessen Abdeckposition in dessen Freigabeposition automatisch mit dem Verschlußschieber 2 in Wirkverbindung gebracht wird.

Im vorstehenden sind nur Magnetbandkassetten beschrieben. Die Erfindung ist auch bei anderen Arten von Kassetten vorteilhaft einsetzbar, beispielsweise bei Kassetten mit kreisscheibenförmig ausgebildeten, plattenartigen Aufzeichnungsträgern, die auf magnetische oder optische Weise abtastbar sind.

## Patentansprüche

1. Kassette (1) für einen Aufzeichnungsträger (10), der zum Aufzeichnen und/oder Wiedergeben von Aufzeichnungen mit Abtastmitteln abtastbar ist, mit einem im wesentlichen quaderförmigen Kassettengehäuse (3), in dem der Aufzeichnungsträger (10) untergebracht ist und das mindestens einen Freistellbereich (15) für den Aufzeichnungsträger (10) aufweist, in dem die Abtastmittel mit dem Aufzeichnungsträger (10) in Abtastverbindung bringbar sind, und mit mindestens einem an dem Kassettengehäuse (3) verstellbar geführten Verschlußschieber (2), der zwischen einer Abdeckposition, in der derselbe den Freistellbereich zumindest teilweise abdeckt, und einer Freigabeposition, in der derselbe den Freistellbereich freigibt, verstellbar ist und der in Richtung zu seiner Abdeckposition von mindestens einer im wesentlichen U-bzw. Ω-förmig ausgebildeten drahtförmigen Biegefeder (44) belastet ist, die in einer gehäuseaußenseitigen Vertiefung (45) im Kassettengehäuse angeordnet ist, und sowohl in der Abdeckposition als auch in der Freigabeposition des Verschlußschiebers von dem Verschlußschieber zur Gänze überdeckt ist, wobei jedes der beiden Enden (51, 52) der U- bzw. Ω-förmigen Biegefeder (44) sich im Bereich einer die wannenförmige Vertiefung (45) begrenzenden Begrenzungswand (45) abstützt und die U- bzw. Ω-förmige Biegefeder (44) mit einem zwischen ihren beiden Enden liegenden Federabschnitt an dem Verschlußschieber (2) angreift.

2. Kassette (1) nach Anspruch 1, die der der Bodenwand (50) der Vertiefung (45) gegenüberliegende Abschnitt des Verschlußschiebers (2) einen von diesem Abschnitt quer abstehenden Lappen (35) aufweist, an dem die U- bzw. Ω-förmige Biegefeder mit dem zwischen den beiden Enden liegenden Federabschnitt angreift, und daß dieser Lappen (35) zugleich als Blockierteil (37) vorgesehen ist, der bei in seiner Abdeckposition befindlichem Verschlußschieber (2) den Bewegungsspielraum des im Kassettengehäuse (3) untergebrachten Aufzeichnungsträgers (10) begrenzt.

3. Kassette (1) für einen Aufzeichnungsträger (10), der zum Aufzeichnen und/oder Wiedergeben von Aufzeichnungen mit Abtastmitteln abtastbar ist, mit einem im wesentlichen quaderförmigen Kassettengehäuse (3), in dem der Aufzeichnungsträger (10) untergebracht ist und das mindestens einen Freistellbereich (15) für den Aufzeichnungsträger (10) aufweist, in dem die Abtastmittel mit dem Aufzeichnungsträger (10) in Abtastverbindung bringbar sind, und mit mindestens einem an dem Kassettengehäuse (3) verstellbar geführten Verschlußschieber (2), der zwischen einer Abdeckposition, in der derselbe den Freistellbereich zumindest teilweise abdeckt, und einer Freigabeposition, in der derselbe den Freistellbereich freigibt, verstellbar ist und der in Richtung zu seiner Abdeckposition von mindestens einer im wesentlichen U-bzw. Ω-förmig ausgebildeten drahtförmigen Biegefeder (44) belastet ist, die einer gehäuseaußenseitigen Vertiefung (45) im Kassettengehäuse angeordnet ist und sowohl in der Abdeckposition als auch in der Freigabeposition des Verschlußschiebers von dem Verschlußschieber zur Gänze überdeckt ist, wobei eines der beiden Enden (55) der U- bzw. Ω-förmigen Biegefeder (44) sich im Bereich einer die Vertiefung (45) begrenzenden Begrenzungswand (45) abstützt und das andere der beiden Enden (56) der U- bzw. Ω-förmigen Biegefeder (44) zum Angreifen an dem Verschlußschleber (2) vorgesehen ist, das zum Angreifen an dem Verschlußschieber (2) vorgesehene Ende (56) der U- bzw. Ω-förmigen Biegefeder (44) im wesentlichen senkrecht zu der Bodenwand (50, 54) der Vertiefung (45) von dem die Biegefeder (44) überdeckenden Abschnitt (28) des Verschlußschiebers (2) wegweisend abgewinkelt ausgebildet ist und für dieses abgewinkelte Ende (56) der Biegefeder (44) in der Bodenwand (54) der Vertiefung (45) ein einseitig offener, in einen Freistellschlitz (57) für das abgewinkelte Ende (56) der Biegefeder (44) mündender Vormontageschlitz (59) vorgesehen ist, in den das abgewinkelte Ende (56) beim Montieren der Biegefeder (44) am Kassettengehäuse (3) eingeführt wird und an dessen geschlossenem Ende (60) sich das abgewinkelte Ende (56) der Biegefeder (44) nach deren Montage abstützt, der Verschlußschieber (2) einen Mitnehmer (61) aufweist, der nach dem Montieren des Verschlußschiebers (2) am Kassettengehäuse (3) beim erstmaligen Verstellen des Verschlußschiebers (2) von seiner Abdeckposition in seine Freigabeposition mit dem in den Vormontageschlitz (59) eingeführten abgewinkelten Ende (56) der Biegefeder (44) in Wirkverbindung kommt und das abgewinkelte Ende (56) der Biegefeder (44) aus dem einseitig offenen Vormontageschlitz (59) heraus und in den Freistellschlitz (57) hinein verstellt, wonach das abgewinkelte Ende (56) der Biegefeder (44) am Verschlußschieber (2) angreift.

## Claims

1. A cassette (1) for a record carrier (10), which can be scanned by scanning means for the purpose of making and/or reproducing recordings, which cassette has a substantially rectangular cassette housing (3) accommodating the record carrier (10) and having at least one access area (15) for the record carrier, in which the scanning means can be brought into scanning contact with the record carrier (10), and at least one sliding cover (2) which is movably guided on the cassette housing (3), which cover is movable between a closed position, in which the cover at least partly covers the access area, and an open position, in which the cover exposes the access area, and which is loaded towards its closed position by at least one substantially U-shaped or Ω-shaped wire-type bending spring which is arranged in a recess (45) in the cassette housing at the housing exterior and which is covered wholly by the sliding cover both when the sliding cover is in its closed position and when it is in its open position, wherein each of the two end portions (51, 52) of the U-shaped or Ω-shaped bending spring (44) is supported at the location of a bounding wall (45) bounding the trough-shaped recess (45) and the U-shaped or Ω-shaped bending spring (44) acts upon the sliding cover (2) with a spring portion situated between its two end portions.

2. A cassette (1) as claimed in Claim 1, wherein the part of the sliding cover (2) which faces the bottom wall (50) of the recess (45) comprises a projection (35) which projects transversely of said part and with which the U-shaped or Ω-shaped bending spring engages with the spring portion situated between the two end portions, and said projection (35) also serves as a blocking member (37) which limits the free movement of the record carrier (10) in the cassette housing (3) when the sliding cover (2) is in its closed position.

3. A cassette (1) for a record carrier (10), which can be scanned by scanning means for the purpose of making and/or reproducing recordings, which cassette has a substantially rectangular cassette housing (3) accommodating the record carrier (10) and having at least one access area (15) for the record carrier, in which the scanning means can be brought into scanning contact with the record carrier (10), and at least one sliding cover (2) which is movably guided on the cassette housing (3), which cover is movable between a closed position, in which the cover at least partly covers the access area, and an open position, in which the cover exposes the access area, and which is loaded towards its closed position by at least one substantially U-shaped or Ω-shaped wire-type bending spring which is arranged in a recess (45) in the cassette housing at the housing exterior and which is covered wholly by the sliding cover both when the sliding cover is in its closed position and when it is in its open position, wherein one (55) of the two end portions of the U-shaped or Ω-shaped bending spring (44) is supported at the location of a bounding wall (45) which bounds the recess (45) and the other one (56) of the two end portions of the U-shaped or Ω-shaped bending spring (44) serves to act upon the sliding cover (2), the end portion (56) of the U-shaped or Ω-shaped bending spring (44) which serves to act upon the sliding cover (2) is substantially right-angled relative to the bottom wall (50, 54) of the recess (45) and points away from the part (28) of the sliding cover (2) which covers the bending spring (44), and for this angled end portion (56) of the bending spring (44) the bottom wall (54) of the recess (45) is formed with an auxiliary slot (59) which is open at one end and which terminates in a free-movement slot (57) for the angled end portion (56) of the bending spring (44), into which auxiliary slot the angled end portion (56) is inserted when the bending spring (44) is mounted on the cassette housing (3) and against whose closed end (60) the angled end portion (56) of the bending spring (44) bears after mounting of said spring, and the sliding cover (2) has an actuating element (61) which when the sliding cover (2), after it has been mounted onto the cassette housing (3), is moved for the first time from its closed position to its open position cooperates with the angled end portion (56) of the bending spring (44) inserted in the auxiliary slot (59) and moves the angled end portion (56) of the bending spring (44) out of the auxiliary slot (59), which is open at one end, and into the free-movement slot (57), after which the angled end portion (56) of the bending spring (44) acts upon the sliding cover (2).

## Revendications

1. Cassette (1) pour un support d'enregistrement (10) qui peut être balayé pour enregistrer et/ou reproduire des enregistrements par des moyens de balayage, cette cassette comportant un boîtier sensiblement parallélépipédique, dans lequel le support d'enregistrement (10) est logé et qui présente au moins une zone de défilement libre (15) pour le support d'enregistrement (10), dans laquelle les moyens de balayage peuvent être amenés en contact de balayage avec le support d'enregistrement (10), et comportant au moins un curseur de fermeture (2) guidé de manière déplaçable sur le boîtier (3) de la cassette, qui peut être déplacé entre une position de recouvrement, dans laquelle il recouvre au moins partiellement la zone de défilement libre, et une position de libération dans laquelle il libère la zone de défilement libre et qui est rappelé en direction de sa position de recouvrement par au moins un ressort de flexion (44) filiforme sensiblement conformé en U ou en Ω, qui est disposé dans un creux du boîtier côté boîtier, et est recouvert en totalité par le curseur de fermeture aussi bien dans la position de recouvrement que dans la position de libération de ce curseur, chacune des deux extrémités (51, 52) du ressort de flexion (44) en U ou en Ω s'appuyant dans la zone d'une paroi (45) délimitant le creux en forme d'auge (45) et le ressort de flexion (44) en U ou en Ω attaquant, le curseur de fermeture par une section du ressort qui se trouve entre ses deux extrémités.

2. Cassette (1) selon la revendication 1, dans laquelle la section du curseur de fermeture (2) opposée à la paroi de fond (50) du creux (45) présente une languette (35) se dressant perpendiculairement sur cette section, languette que le ressort de flexion en U ou en Ω attaque par la section de ressort qui se trouve entre ses deux extrémités, et cette languette (35) constitue également une pièce de blocage (37) qui limite le jeu de déplacement du support d'enregistrement logé dans le boîtier de la cassette lorsque le curseur de fermeture (2) se trouve dans sa position de recouvrement.

3. Cassette (1) pour un support d'enregistrement (10) qui peut être balayé pour enregistrer et/ou reproduire des enregistrements par des moyens de balayage, cette cassette comportant un boîtier (3) sensiblement parallélépipédique, dans lequel le support d'enregistrement (10) est logé et qui présente au moins une zone de défilement libre (15) pour le support d'enregistrement (10), dans laquelle les moyens de balayage peuvent être amenés en contact de balayage avec le support d'enregistrement (10), et comportant au moins un curseur de fermeture (2) guidé de manière déplaçable sur le boîtier (3) de la cassette, qui peut être déplacé entre une position de recouvrement, dans laquelle il recouvre au moins partiellement la zone de défilement libre, et une position de libération dans laquelle il libère la zone de défilement libre et qui est rappelé en direction de sa position de recouvrement par au moins un ressort de flexion (44) filiforme sensiblement en U ou en Ω, qui est disposé dans un creux (45) côté du boîtier dans le boîtier de la cassette, et est recouvert en totalité par le curseur de fermeture aussi bien dans la position de recouvrement que dans la position de libération de ce curseur, l'une des deux extrémités (55) du ressort de flexion (44) en U ou en Ω prenant appui dans la zone d'une paroi (45) délimitant le creux (45) et l'autre (56) des deux extrémités du ressort de flexion (44) filiforme sensiblement en U ou en Ω étant destinée à attaquer le curseur de fermeture (2), l'extrémité (56) prévue pour attaquer le curseur de fermeture (2) du ressort de flexion filiforme (44) en U ou en Ω étant coudée en substance perpendiculairement à la paroi de fond (50, 54) du creux (45) dans un sens s'écartant de la section (28) du curseur de fermeture (2) recouvrant le ressort de flexion (44), et il est prévu pour cette extrémité coudée (56) du ressort de flexion (44), dans la paroi de fond (54) du creux (45), une fente de prémontage (59) ouverte d'un côté et débouchant dans une fente de déplacement libre (57) pour l'extrémité coudée (56) du ressort de flexion (44), fente de prémontage dans laquelle l'extrémité coudée (56) est introduite lors du montage du ressort de flexion (44) sur le boîtier (3) de la cassette et à l'extrémité fermée (60) de laquelle l'extrémité coudée (56) du ressort de flexion (44) s'appuie après son montage, le curseur de fermeture (2) présente un poussoir (61) qui, après le montage du curseur de fermeture (2) sur le boîtier (3) de la cassette, lors de son déplacement pour la première fois entre sa position de recouvrement et sa position de libération, vient en contact actif avec l'extrémité coudée (56) du ressort de flexion (44) introduite dans la fente de prémontage (59) et l'extrémité coudée (56) du ressort de flexion (44) est déplacée hors de la fente de prémontage (59) ouverte d'un côté et est introduite dans la fente de déplacement libre (57), après quoi l'extrémité coudée (56) du ressort de flexion (44) attaque le curseur de fermeture (2).
